# EUROPÄISCHE PATENTSCHRIFT

(11) **EP 1 555 275 B1**
(45) Veröffentlichungstag und Bekanntmachung des Hinweises auf die Patenterteilung: **07.05.2008**
(21) Anmeldenummer: 05000040.5
(22) Anmeldetag: 04.01.2005
(51) Int. Cl.: C08G 18/40, C08G 18/38, C08J 9/00

(54) **Polyetherester als Flammschutzadditive für Polyurethanweichschaumstoffe**
Polyetherester as flame retardant additive for polyurethane flexible foams
Polyetherester comme additif ignifuge pour les mousses flexibles de polyuréthane

(30) Priorität: 13.01.2004 DE 102004001746
(43) Veröffentlichungstag der Anmeldung: 20.07.2005
(73) Patentinhaber: Bayer MaterialScience AG, 51368 Leverkusen (DE)
(72) Erfinder: Dreier, Thorsten, Dr., 40545 Düsseldorf (DE); Roers, Rolf, Dr., 46399 Bocholt (DE); Gossner, Matthäus, 51061 Köln (DE); Meyer-Ahrens, Sven, Dr., 51375 Leverkursen (DE)

(56) Entgegenhaltungen:
- EP-A- 1 298 160
- DE-A1- 19 601 410
- DATABASE WPI Section Ch, Week 198632 Derwent Publications Ltd., London, GB; Class A25, AN 1986-208859 XP002388787 & JP 61 141722 A (KOHKOKU CHEM IND CO LTD) 28. Juni 1986 (1986-06-28)

## Beschreibung

Die Erfindung betrifft Polyurethan-Weichschaumstoffe, die die Anforderungen nach FMVSS 302 erfüllen, ein Verfahren zu ihrer Herstellung und deren Verwendung.

Polyurethan-Weichschaumstoffe werden durch Umsetzung von Polyolen mit organischen Polyisocyanaten in Gegenwart von Treibmitteln und Katalysatoren hergestellt. Diese Schaumstoffe werden auf den verschiedensten Gebieten eingesetzt, beispielsweise als Teppichunterlagen, Zwischenfutter, Matratzen, Kissen, Polstermaterial, Isoliermatrial, etc. Schaumstoffe, die aus Polyisocyanaten und Polyesterpolyolen unter Verwendung geeigneter Hilfs- und Zusatzstoffe hergestellt werden, erfüllen bei einer Rohdichte von etwa 35 kg/m³ die Anforderungen des Federal Motor Vehicle Safety Standard (FMVSS) 302. Derartige Ester-PUR-Schaumstoffe sind aber in einer Reihe von Eigenschaften den bekannten Ether-PUR-Schaumstoffen unterlegen. So ist z.B. die Offenporigkeit der Ester-PUR-Schaumstoffe schlechter, ihre Elastizität geringer und ihre Widerstandsfähigkeit gegen Feuchtigkeit und Wärme niedriger.

Andererseits erfüllen konventionelle Etherschaumstoffe bei einer Rohdichte von etwa 35 kg/m³ nicht die Anforderungen der Norm FMVSS 302. Um diesen Nachteil zu beseitigen und außerdem niedrigere Rohdichten erhalten zu können, ist es üblich, Ether-PUR-Weichschaumstoffe durch Zusatz geeigneter Flammschutzmittel herzustellen, die dann die Anforderungen der Testnorm erfüllen. Diese Flammschutzmittel haben jedoch auch Nachteile: insbesondere halogenfreie Flammschutzmittel sind häufig teuer, weniger teure Flammschutzmittel führen zu erhöhten Gesamtemissionen der Schäume. Ein ebenso unerwünschter Nebeneffekt von Flammschutzmitteln ist deren Wirkung als Weichmacher.

Es wäre daher wünschenswert, eine Möglichkeit zu finden, Ether-PUR-Schaumstoffe ohne Zusatz großer Mengen von Flammschutzmitteln flammgeschützt auszurüsten. Es erscheint naheliegend, zur Erhöhung der Flammwidrigkeit den üblichen Standardpolyetherpolyolen Polyesterpolyole in geringen Mengen zuzusetzen. Überraschenderweise ist jedoch die Brennbarkeit der auf diese Weise erhaltenen Schaumstoffe höher als die von reinem Polyetherweichschaum.

Es wurde nun gefunden, dass bei Einsatz von speziellen Polyetherestern die gewünschte flammhemmende Wirkung eintritt, und die erhaltenen Schäume den FMVSS-Test bestehen. Darüber hinaus wurde festgestellt, dass der Gehalt an Flammschutzmitteln gegenüber reinen Standardpolyetherweichschäumen reduziert werden kann, so dass deren Nachteile vermindert werden.

Gegenstand der vorliegenden Erfindung sind Polyurethan-Weichschaumstoffe, die die Anforderungen nach FMVSS 302 erfüllen, erhältlich durch die Umsetzung von
a) organischen und/oder modifizierten Polyisocyanaten mit
b) einer Polyolkomponente, die
   b1) 90 bis 99 Gewichtsteile eines Polyetherpolyols mit einer OH-Zahl von 20 bis 200 mg KOH/g und einer Funktionalität von 2 bis 4 und
   b2) 1 bis 10 Gewichtsteile eines Polyetheresterpolyols mit einer OH-Zahl von 150 bis 450 mg KOH/g und einer Funktionalität von 2 bis 3 enthält,
   in Gegenwart von
c) Wasser und/oder anderen Treibmitteln,
d) Katalysatoren,
e) Stabilisatoren, gegebenenfalls
f) Flammschutzmitteln und gegebenenfalls
g) weiteren Hilfs- und Zusatzstoffen.

Geeignete organische und/oder modifizierte Polyisocyanate a) sind dem Fachmann im Prinzip bekannt und beispielsweise in "Kunststoffhandbuch", Band 7 "Polyurethane", Kapitel 5.1 beschrieben z.B. aliphatische, cycloaliphatische, araliphatische, aromatische und heterocyclische Polyisocyanate, der Formel Q(NCO)ₙ in der n = 2 - 4, vorzugsweise 2, und Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 5 - 10 C-Atomen, einen aromatischen Kohlenwasserstoffrest mit 6 - 15, vorzugsweise 6 - 13 C-Atomen, oder einen araliphatischen Kohlenwasserstoffrest mit 8 - 15, vorzugsweise 8 - 13 C-Atomen, bedeuten, z.B. solche Isocyanate wie sie in der DE-OS 2 832 253, Seiten 10 -11, beschrieben werden.

Besonders bevorzugt werden in der Regel die technisch leicht zugänglichen Polyisocyanate, z.B. das 2,4- und 2,6-Toluylendiisocyanat sowie beliebige Gemische dieser isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanatgruppen, Harnstoffgruppen oder Biuretgruppen aufweisende Polyisocyanate ("modifizierte Isocyanate"), insbesondere solche modifizierten Isocyanate, die sich vom 2,4- und/oder 2,6-Toluylendiisocyanat bzw. vom 4,4'- und/oder 2,4'-Diphenylmethandiisocyanat ableiten.

Ganz besonders bevorzugt ist, wie bereits erwähnt, Toluylendiisocyanat mit einem Gehalt von 80 Gew.-% an 2,4- und 20 Gew.-% an 2,6-Isomeren (TDI-80) sowie Toluylendiisocyanat mit einem Gehalt von 65 Gew.-% an 2,4- und 35 Gew.-% an 2,6-Isomeren (TDI-65).

Geeignete Polyetherpolyole b1) weisen einen OH-Zahlenbereich von üblicherweise 20 bis 200, bevorzugt 42 bis 60, und eine Funktionalität von 2 bis 4, bevorzugt 2 bis 3 auf. Bevorzugt sind Polyetherpolyole mit überwiegend sekundären OH-Gruppen. Als Starterkomponenten werden Verbindungen mit reaktionsfähigen Wasserstoffatomen wie Wasser, Alkohole, Ammoniak oder Amine, z.B. Ethylenglykol, Propylenglykol-(1,3) oder -(1,2), Trimethylolpropan, Glycerin, 4,4'-Dihydroxydiphenylpropan, Anilin, Ethanolamin oder Ethylendiamin verwendet. Bevorzugt werden als Startkomponenten Trimethylolpropan und/oder Glycerin eingesetzt.

Erfindungsgemäß sind solche Polyetherpolyole bevorzugt, die ausschließlich oder weit überwiegend (über 85 Gew.-% bezogen auf alle vorhandenen OH-Gruppen im Polyetherpolyol) sekundäre OH-Gruppen aufweisen.

Ferner können auch die an sich bekannten füllstoffhaltigen Polyole eingesetzt werden. Bevorzugt sind Dispersionen von Polymeren enthaltende höhermolekulare Hydroxylverbindungen, die durch Umsetzung von Mono- und/oder Polyisocyanaten mit primäre und/oder sekundäre Aminogruppen aufweisenden Polyamiden und/oder Hydrazinen und/oder Alkanolaminen in einer 1 bis 8 primäre und/oder sekundäre Hydroxylgruppen aufweisenden Verbindung mit einem Molekulargewicht von 400 bis 10.000 g/mol hergestellt worden sind. In Frage kommen ferner Dispersionen von Reaktionsprodukten von Polyisocyanaten und Alkanolaminen in Polyethern und Dispersionen von Homo- und Copolymerisaten von ungesättigten Monomeren wie Styrol oder Acrilnitril in Polyethern (sog. "Polymer-Polyole").

Geeignete Polyetheresterpolyole b2) sind vorzugsweise Alkoxylierungsprodukte von Oligo- und Polyestern aus aromatischen und aliphatischen Dicarbonsäuren und Dicarbonsäurederivaten wie z.B. Anhydriden mit gegenüber Isocyanaten reaktiven Endgruppen. Polyetheresterpolyole (oder Polyesteretherpolyole) können durch gezielten Aufbau hergestellt werden, z.B. durch Alkoxylierung von Carbonsäuren oder Carbonsäureanhydriden oder Polyestern, oder durch molekülverdoppelnde Kondensation von OH-terminierten Polyestern. Diese Verbindungen können ebenfalls mit den bekannten Methoden mit Epoxiden zur Reaktion gebracht werden.

Die zum Einsatz kommenden Polyetheresterpolyole b2) können als Startermoleküle z.B. Adipinsäure, Maleinsäure, Fumarsäure, Phthalsäure, Terephthalsäure, Isophthalsäure, Tetrahydrophthalsäure, halogenierte Phthal- und Tetrahydrophthalsäuren und ähnliche enthalten. Bevorzugte Carbonsäuren sind Adipinsäure, Maleinsäure, Fumarsäure, beziehungsweise deren Derivate, besonders bevorzugt sind Phthalsäure, Terephthalsäure und Isophthalsäure beziehungsweise deren Derivate. Die neben den Carbonsäuren beziehungsweise Carbonsäurederivaten verwendeten Startermoleküle sind Folgeprodukte des Ethylenoxids und Propylenoxids wie z.B. Ethylenglykol, Diethylenglykol, Triethylenglykol, 1,2-Propylenglykol, Dipropylenglykol oder die diprimeren Akohole wie z.B. 1,4-Butandiol, 1,6-Hexandiol, Neopentylglycol, 1,3-Butandiol oder verzweigende Triolkomponenten wie z.B. Trimethylolpropan, Trimethylolethan, Glycerin sowie auch längerkettige Trihydroxylverbindungen. Die Polyetheresterpolyole b2) weisen eine OH-Zahl von 150 bis 450 mg KOH/g und einer Funktionalität von 2 bis 3 auf.

Die Polyetheresterpolyole b2) werden der Polyolkomponente b) in einer Menge von 1 bis 10 Gewichtsteilen, bevorzugt 2 bis 7 Gewichtsteilen, besonders bevorzugt 3 bis 5 Gewichtsteilen, bezogen auf das Gesamtgewicht der Komponente b), zugesetzt.

Als Treibmittel c) werden Wasser oder andere, dem Fachmann bekannte chemische oder physikalische Treibmittel eingesetzt, z.B. Methylenchlorid, Diethylether, Aceton, oder Alkane wie z.B. Pentan, i-Pentan oder Cyclopentan oder anorganische Treibmittel wie z.B. Luft, CO₂. Wird als Treibmittel Wasser verwendet, so wird es bevorzugt in einer Menge von 1 bis 6 Gew.-Teilen, bezogen auf das Gesamtgewicht der Komponente b), eingesetzt.

Geeignete Flammschutzmittel f) sind dem Fachmann bekannt und z.B. in "Kunststoffhandbuch", Band 7 "Polyurethane", Kapitel 5.1 beschrieben. Als Flammschutzmittel f) werden halogenfreie Phosphorverbindungen wie z.B. Triaryl- und Trialkylphosphate sowie Triaryl- und Trialkylphosphonate oder Tetraalkyldiphosphonatverbindungen eingesetzt. Besonders bevorzugte Flammschutzmittel sind reaktive Phosphorpolyole, wie sie beispielsweise unter den Handelsnamen Exolit^{®} OP 550 und Exolit^{®} OP 560 von der Clariant International Ltd, CH-4132 Muttenz vertrieben werden.

Das Flammschutzmittel f) wird bevorzugt in einer Menge von 2 bis 8 Gewichtsteilen, besonders bevorzugt 3 bis 6 Gewichtsteilen, bezogen auf das Gesamtgewicht der Komponente b), eingesetzt.

Katalysatoren d), Stabilisatoren e), sowie weitere Hilfs- und Zusatzstoffe g) für die Herstellung von Polyurethan-Weichschäumen sind dem Fachmann im Prinzip bekannt und beispielsweise in "Kunststoffhandbuch", Band 7 "Polyurethane", Kapitel 5.1 beschrieben.

Als Katalysatoren werden vorzugsweise Aminverbindungen und/oder Metallverbindungen, insbesondere Schwermetallsalze und/oder metallorganische Verbindungen, eingesetzt. Insbesondere werden als Katalysatoren bekannte tertiäre Amine und/oder mit organische Metallverbindungen verwendet. Als organische Metallverbindungen kommen z.B. Zinnverbindungen in Frage, wie beispielsweise Zinn-(II)-salze von organischen Carbonsäuren, z.B. Zinn-(II)-acetat, Zinn-(II)-octoat, Zinn-(II)-ethylhexanoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Als für diesen Zweck übliche organische Amine seien beispielhaft genannt: Triethylamin, 1,4-Diazabicyclo-[2,2,2]-octan, Tributylamin, Dimethylbenzylamin, N,N,N',N'-Tetramethylethylendiamin, N,N,N',N'-Tetramethyl-butandiamin, N,N,N',N'-Tetramethyl-hexan-1,6-diamin, Dimethylcyclohexylamin. Die Katalysatoren können einzeln oder in Form von Mischungen eingesetzt werden.

Als Schaumstabilisatoren kommen vor allem Polyethersiloxane, speziell wasserunlösliche Vertreter, in Frage. Diese Verbindungen sind im allgemeinen so aufgebaut, dass ein Copolymerisat aus Ethylenoxid und Propylenoxid mit einem Polydimethylsiloxanrest verbunden ist. Wasserlösliche Schaumstabilisatoren sind z.B. in US-A 2 834 748, 2 917 480 und 3 629 308 beschrieben; sie sind zur Herstellung von hochelastischen (HR) Schaumstoffen jedoch nicht geeignet.

Die im erfindungsgemäßen Verfahren eingesetzten Schaumstoffe werden üblicherweise hergestellt, indem das Di- oder Polyisocyanat a) als eine Komponente und die übrigen Bestandteile in Mischung als die andere Komponente mittels einer geeigneten, üblicherweise maschinellen Einrichtung intensiv vermischt werden. Die Herstellung der Schaumstoffe kann sowohl kontinuierlich, etwa auf einer Transportbandanlage als auch diskontinuierlich erfolgen. Die Herstellung von Weichschaumstoffen ist dem Fachmann im Prinzip bekannt und beispielsweise in G. Oertel (Hrsg.) "Kunststoff-Handbuch", Band VII, Carl Hanser Verlag, 3. Auflage, München 1993, S. 193-220 beschrieben. Die Kennzahl, ein bei der Herstellung von Polyurethanschaumstoffen sehr häufig verwendeter Begriff, sagt etwas über den Vernetzungsgrad eines Schaumstoffs aus. Sie ist definiert als das mit 100 multiplizierte Verhältnis der Isocyanatgruppen zu den isocyanatreaktiven Gruppen in der Reaktionsmischung. Bevorzugt wird die Herstellung der Schaumstoffe so vorgenommen, dass die Kennzahl 80 bis 120, besonders bevorzugt 90 bis 115 beträgt. Das Raumgewicht der entstehenden Schaumstoffe beträgt bevorzugt 15 kg/m³ bis 55 kg/m³, besonders bevorzugt 20 kg/m³ bis 50 kg/m³.

Die erfindungsgemäßen Polyurethan-Weichschaumstoffe eignen sich insbesondere zur Verwendung als Liege-, Sitz- und Polstermaterial sowie zur Innenausstattung von Automobilen.

### Beispiele

### Einsatzstoffe

### Polyols

| | |
|---|---|
| Polyol A: | PO/EO-Addukt an eine Mischung aus Glycerin und Propylenglykol, OH-Zahl 56 (Arcol^{®} 1105, Bayer AG) |
| | |
| Polyol B: | Polyesterpolyol auf Basis Adipinsäure, Phthalsäureanhydrid und Ethylenglykol, OH-Zahl 64 (Desmophen^{®} PEP 175 A, Bayer AG) |
| | |
| Polyol C: | Polyesterpolyol auf Basis Adipinsäure, Isophthalsäure und Diethylenglykol, OH-Zahl 112 (Desmophen^{®} VP.LS 2782, Bayer AG) |
| | |
| Polyol D: | EO-Addukt an eine Mischung aus Phthalsäureanhydrid, Diethylenglycol und Ethylendiamin, OH-Zahl 310, Funktionalität 2 (Desmophen^{®} VP.PU 1431, Bayer AG) |
| | |
| Polyol E: | PO-Addukt an eine Mischung aus Phthalsäureanhydrid, Diethylenglycol, Sorbit und Ethylendiamin OH-Zahl 435, Funktionalität 2,8 (Desmophen^{®} VP.PU 20AP74) |

### Flammschutzmittel

| | |
|---|---|
| FS 1: | reaktives Phosphorpolyol, Funktionalität ca. 2 |
| | |
| | (Exolit^{®} OP550, Clariant International Ltd.) |
| | |
| FS 2: | reaktives Phosphorpolyol, Funktionalität ca. 2 |
| | |
| | (Exolit^{®} OP560, Clariant International Ltd.) |
| | |
| FS 3: | Triphenylphosphat |

### Katalysatoren und Stabilisatoren

| | |
|---|---|
| Kat 1: | Mischung aus BDMAEE/DPG im Verhältnis 70/30 |
| | |
| | (Niax^{®} A1, Osi Specialties) |
| | |
| Kat 2: | Mischung aus Triethylendiamin/DPG im Verhältnis 33/67 |
| | |
| | (Dabco^{®} 33LV, Air Products) |
| | |
| Kat 3: | Zinn(II)octoat |
| | |
| Stabilisator: | Silikonstabilisator (Tegostab^{®} B 8232, Goldschmidt AG) |

In einem Pappbecher mit Aluminiumboden wurden die Polyole vorgelegt. Nacheinander wurden zu den Polyolen Wasser, Stabilisator, gegebenenfalls Flammschutzmittel und die Katalysatoren 1 und 2 eingewogen. Anschließend wurde die Mischung 25 Sekunden bei 1200 U/min gerührt. Aktivator 3 wurde eingewogen und 5 Sekunden lang mit derselben Rührerdrehzahl vermischt. In einem Guss wurde die Menge an TDI zugegeben und weitere 7 Sekunden vermischt. Danach wurde die Reaktionsmischung in eine Pappform mit einem Volumen von 20x20x14 cm gegossen und verschäumt. Die jeweiligen sich ergebenden Eigenschaften der Polyurethanweichschaumstoffe sind in der Tabelle aufgeführt.

Die Offenzelligkeit wurde über die Messung des Strömungswiderstands bestimmt wie in DE -A 199 28 156 unter Beispiel 12 und in Abbildungen 1-3 beschrieben.

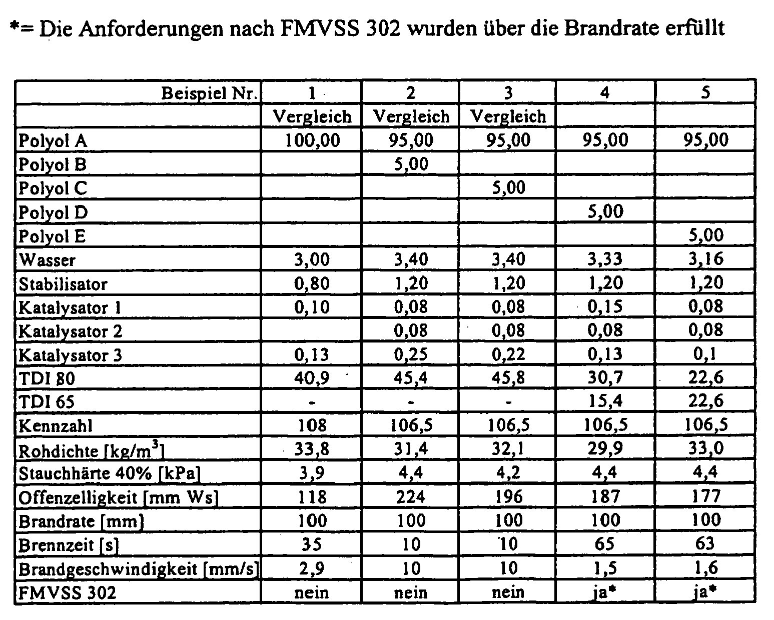

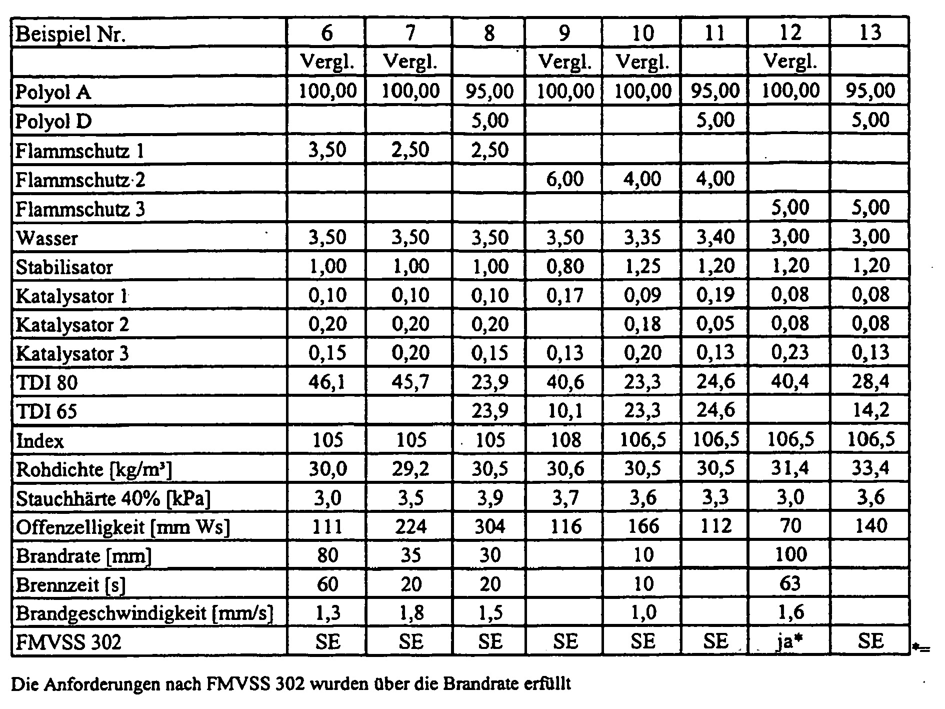

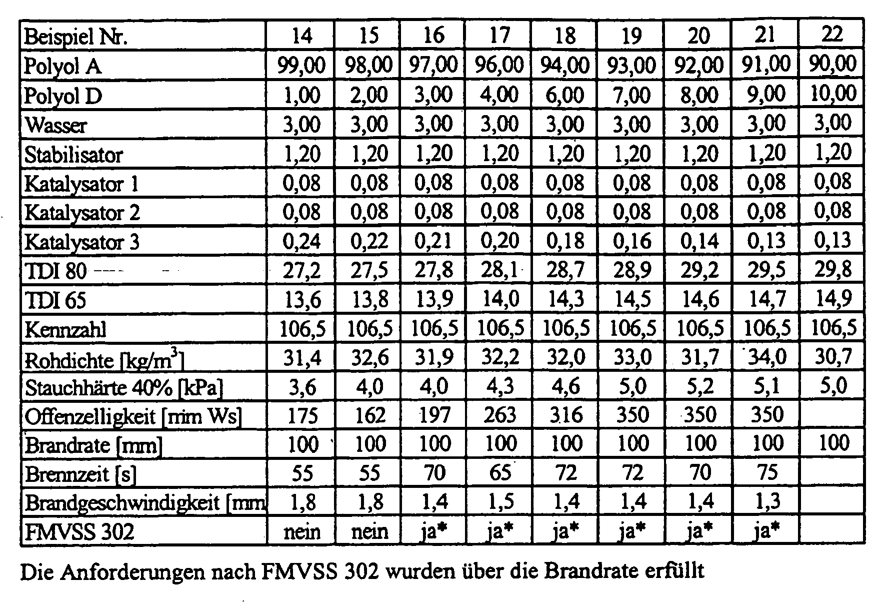

## Patentansprüche

1. Die Anforderungen nach FMVSS 302 erfüllender Polyurethan-Weichschaumstoff, erhältlich durch Umsetzung von
a) organischen und/oder modifizierten Polyisocyanaten mit
b) einer Polyolkomponente, die
b1) 90 bis 99 Gewichtsteile eines Polyetherpolyols mit einer OH-Zahl von 20 bis 200 mg KOH/g und einer Funktionalität von 2 bis 4 und
b2) 1 bis 10 Gewichtsteile eines Polyetheresterpolyols mit einer OH-Zahl von 150 bis 450 mg KOH/g und einer Funktionalität von 2 bis 3 enthält,
in Gegenwart von
c) Wasser und/oder anderen Treibmitteln,
d) Katalysatoren, die ausschließlich ausgewählt sind aus der Gruppe von reaktiven oder unreaktiven halogenfreien Phosphorverbindung, die eine Phosphorsäuretriaryl- und/oder Phosphorsäuretrialkyl- und/ oder Tetraalkyldiphosphonatverbindung enthalten.
e) Stabilisatoren, gegebenenfalls
f) Flammschutzmitteln und gegebenenfalls
g) weiteren Hilfs- und Zusatzstoffen.

2. Polyurethan-Weichschaumstoff gemäß Anspruch 1, bei dem das Flammschutzmittel f) in einer Menge von 2 bis 8 Gewichtsteilen, bezogen auf des Gesamtgewicht der Komponenten b) bis g), eingesetzt wird.

3. Polyurethan-Weichschaumstoff gemäß einem der Ansprüche 1 bis 2, bei dem als organisches Polyisocyanat a) Toluylendiisocyanat eingesetzt wird.

4. Polyurethan-Weichschaumstoff gemäß einem der Ansprüche 1 bis 3, bei dem als Treibmittel c) Wasser in einer Menge von 1 bis 6 Gew.-Teilen, bezogen auf das Gesamtgewicht der Komponenten b) bis g), eingesetzt wird.

5. Verwendung eines Polyurethan-Weichschaumstoffs gemäß einem der Ansprüche 1 bis 4 als Liege-, Sitz- und Polstermaterial sowie zur Innenausstattung von Automobilen.

## Claims

1. Polyurethane flexible foam fulfilling the requirements according to FMVSS 302 and obtainable by reacting
a) organic and/or modified polyisocyanates with
b) a polyol component that
b1) contains from 90 to 99 parts by weight of a polyether polyol having an OH value of from 20 to 200 mg KOH/g and a functionality of from 2 to 4 and
b2) from 1 to 10 parts by weight of a polyether ester polyol having an OH value of from 150 to 450 mg KOH/g and a functionality of from 2 to 3,
in the presence of
c) water and/or other blowing agents,
d) catalysts which are selected solely from the group of reactive or non-reactive halogen-free phosphorus compounds containing a phosphoric acid triaryl and/or phosphoric acid trialkyl and/or tetraalkyl diphosphonate compound,
e) stabilizers, optionally
f) flame retardants and, optionally,
g) further auxiliaries and additives.

2. Polyurethane flexible foam according to Claim 1, in which the flame retardant f) is used in an amount of from 2 to 8 parts by weight, based on the total weight of components b) to g).

3. Polyurethane flexible foam according to any one of Claims 1 to 2, in which toluene diisocyanate is used as organic polyisocyanate a).

4. Polyurethane flexible foam according to any one of Claims 1 to 3, in which water in an amount of from 1 to 6 parts by weight, based on the total weight of components b) to g), is used as blowing agent c).

5. Use of a polyurethane flexible foam according to any one of Claims 1 to 4 as lying, sitting or upholstery material and also for the internal fittings of motor vehicles.

## Revendications

1. Mousse souple de poyuréthane remplissant les exigences selon FMVSS 302 obtenue par réaction
a) de polyisocyanates organiques et/ou modifiés avec
b) un constituant polyol, lequel contient
b1) de 90 à 99 parties en poids d'un polyétherpolyol avec un indice OH de 20 à 200 mg de KOH/g et une fonctionnalité de 2 à 4 et
b2) de 1 à 10 parties en poids d'un polyétheresterpolyol avec un indice OH de 150 à 450 mg de KOH/g et une fonctionnalité de 2 à 3,
en présence
c) d'eau et/ou d'autres agents moussants,
d) de catalyseurs qui sont exclusivement choisis parmi des composés du phosphore exempts d'halogène réactifs et non réactifs, lesquels contiennent un composé triaryle d'acide phosphorique et/ou trialkyle d'acide phosphorique et/ou diphosphonate de tétraalkyle ;
e) de stabilisateurs, facultativement
f) d'agents de protection aux flammes et facultativement
g) d'autres auxiliaires et additifs.

2. Mousse souple de polyuréthane selon la revendication 1, dans laquelle l'agent de protection aux flammes f) est utilisé dans une quantité de 2 à 8 parties en poids rapportée au poids total des constituants b) à g).

3. Mousse souple de polyuréthane selon l'une quelconque des revendications 1 à 2, dans laquelle on utilise comme polyisocyanate organique a) du diisocyanate de toluylène.

4. Mousse souple de polyuréthane selon l'une quelconque des revendications 1 à 3, dans laquelle on utilise comme agent moussant c) de l'eau dans une quantité de 1 à 6 parties en poids, rapportée au poids total des constituants b) à g).

5. Utilisation d'une mousse souple de polyuréthane selon l'une quelconque des revendications 1 à 4 comme matériau de couchage, d'assise et de coussin ainsi que pour l'équipement interne de véhicules automobiles.
